# EUROPEAN PATENT SPECIFICATION

(11) **EP 0 900 508 B1**
(45) Date of publication and mention of the grant of the patent: **28.07.2004**
(21) Application number: 97924987.7
(22) Date of filing: 21.05.1997
(51) Int. Cl.: H04Q 7/20, H04Q 7/36

(54) **A DYNAMIC RADIO BACKBONE TRANSMISSION SYSTEM**
DYNAMISCHES FUNKHAUPTNETZ-ÜBERTRAGUNGSSYSTEM
SYSTEME DE TRANSMISSION DYNAMIQUE PAR RESEAU RADIO DE BASE

(30) Priority: 21.05.1996 ZA 9604041
(43) Date of publication of application: 10.03.1999
(73) Proprietor: Telefonaktiebolaget LM Ericsson (publ), 164 83 Stockholm (SE)
(72) Inventor: CHARAS, Philippe, S-194 35 Upplands Väsby (SE)
(74) Representative: Dohmen, Johannes Maria Gerardus
(86) International application number: PCT/EP1997/002715
(87) International publication number: WO 1997/044967

(56) References cited:
- EP-A- 0 690 643
- WO-A-93/06684
- WO-A-96/01543
- WO-A-96/15642
- DE-B- 2 659 638
- BONZANO L ET AL: "A NEW RADIO ACCESS STRATEGY USING A REPEATER IN THE DECT RADIO LOCAL LOOP APPLICATION" INTERNATIONAL CONFERENCE ON UNIVERSAL PERSONAL COMMUNICATIONS, 1 January 1994, pages 656-660, XP000566002
- BRODIE I: "Performance of dynamic channel assignment techniques in a cellular environment" 1992 IEEE INTERNATIONAL CONFERENCE ON SELECTED TOPICS IN WIRELESS COMMUNICATIONS. CONFERENCE PROCEEDINGS (CAT. NO.92TH0462-2), VANCOUVER, BC, CANADA, 25-26 JUNE 1992, ISBN 0-7803-0723-2, 1992, NEW YORK, NY, USA, IEEE, USA, pages 340-343, XP002000365

## Description

### Field of the invention

The present invention relates generally to telecommunication systems comprising a radio link connection between two or more telecommunication units. More specifically, the invention provides a radio backbone transmission system for connecting a plurality of geographically spread remote radio access units to a network access unit of a mobile radio telecommunication network, such as a cellular mobile telecommunication network, the radio access units each providing service to a particular area or cell of the mobile radio telecommunication network.

### Background of the invention

A typical cellular mobile communication system comprises mobile radio subscriber units such as mobile telephones, a plurality of radio base stations, each providing service to a geographical area or cell, and Mobile services Switching Centers (MSC) or Mobile Telephone Switching Offices (MTSO) to which the base stations connect. The MSC and MTSO are, in turn, coupled to a conventional Public Switch Telephone Network (PSTN) and Integrated Services Digital Network (ISDN), for example, for completing transmissions, such as telephone calls, between mobile radio subscribers and landline subscribers.

Present cellular systems provide coverage over relatively wide areas, i.e. relatively large cells. Analogue cellular systems, such as designated AMPS, ETACS, NMT-450 and NMT-900 have been deployed throughout the world. Digital cellular systems are designated IS-548 in North America and the pan-European GSM system (including DCS 1800 and PCS 1900). These systems, and others, are described, for example, in the book titled "Cellular Radio Systems", by Balston et al., published by Artech House, Norwood, MA., 1993.

First generation cellular mobile networks provide service to macrocells, having a range of 1 to 5 km from the base station to the cell boundary, and large cells (5 to 35 km), with some satellite cells ( > 500 km).

An important problem in wireless cellular communication is to provide full coverage cost effectively. This has lead to the splitting of cells in dense traffic areas, adding microcells (10 to 400 m for pedestrians and 300 m to 2 km for vehicles) and minicells (500 m to 3 km) overlaid by a macrocell structure. The overlaying macrocells serve low-traffic areas and address cell crossings by mobile subscribers.

European patent application 0,690,643 discloses a radio communication system, wherein a large cell of a central base station is surrounded, at its outer periphery, by a plurality of macrocells, serviced by decentralised radio base stations. Thedecentralised radio base stations each connect to the central base station by a point-to-point link radio backbone transmission system. The large cell and its surrounding macrocells provide an extended service area. A plurality of adjacent service areas make up the actual coverage area of the radio communication system.

As cellular penetration continues as forecasted, future cellular mobile networks will also have picocells (a few meters) and nanocells (up to 10 m), often in clusters of street microcells, with each cluster overlaid by a macrocell. In a typical cell overlay configuration, each microcell has its own base station providing service to the corresponding cell, whereas the several base stations are wired to a concentrator or access unit which, in turn, is coupled to an MSC or MTSO. In particular in a picocell and nanocell environment these wired links or loops, providing a static, fixed backbone infrastructure involve substantial networking and transmission costs, not contributing to the object of providing cost effective cellular mobile coverage.

An essential requirement for pico-, nano- or microcell cellular mobile network systems is, however, enabling installations which are economic as to capacity and power. That is to say, the various components of the system have to be designed such that an optimum between geographical coverage, range, communication capacity and installation costs can be achieved, in order to provide competitive wireless connections.

### Summary of the Invention

With regard to the optimization of capacity and power, the backbone infrastructure forms a critical design part for providing a viable pico-, nano- and microcell cellular mobile network.

Accordingly, it is an object of the present invention to provide a backbone infrastructure optimally designed for the connection of the several base stations of micro-, nano- and picocells and the corresponding network system access unit of a cellular mobile communication system.

The invention is characterized in that the radio backbone transmission system comprises dynamic access node means having radio transceiver means, antenna means and control means, operatively connected for accessing a plurality of common radio communication channels, the radio access units comprising backbone access units having radio transceiver means, antenna means and control means, each of the backbone access units being operatively connected for accessing the plurality of common radio communication channels, wherein the control means of the dynamic radio access node means and the backbone access units are arranged for adaptively selecting a free communication channel of the plurality of common radio communication channels, the dynamic access node means being arranged for connection to the network access unit.

The invention is based on the insight that optimization as to capacity and power can be achieved through a transmission backbone system that dynamically allocates its transmission resources upon demand by dynamic channel access (DCA).

By using DCA as the channel access technique of the radio backbone system according to the present invention, all the common radio communication channels of the backbone system can be used by the pico-, nano- and microcell base station sites connecting to a Dynamic radio Access Node (DAN) means without the basic need for a channel or frequency planning. This, because the DCA algorithm automatically prevents the seizure of already occupied communication channels of cell.

By using the dynamic radio backbone transmission system of the present invention in a cellular mobile network for providing wireless connections between several small cell radio base stations and a concentrator or MTSO, a very flexible, economic, and high traffic handling system can be obtained.

In a further embodiment of the invention, the radio transceiver means, antenna means and control means of the dynamic radio access node means are arranged for accessing the plurality of common radio communication channels in directionally separated transmission sectors, wherein the control means are arranged to co-operate with the backbone access units in a transmission sector for adaptively selecting a free radio communication channel of said plurality of common radio communication channels, which radio communication channel, when accessed, can be reused by the same dynamic radio access node means but is individual to a radio link connection in a transmission sector.

By sectorizing, the effective range of a radio link connection can be extended. That is to say, by radiating the RF power of a transmitter means into a directionally limited geographical are, the effective range of the radio transmitter can be extended compared to omnidirectional coverage. By reciprocity, the same holds for the reception sensitivity of the receiver means.

Further, the common radio communication channels can be reused from sector to sector within the same DAN, which provides a very efficient use of transmission resources, such as required.

In a practical embodiment of the invention, the dynamic radio access mode means comprise a number of radio access modules, each having radio transceiver means and control means arranged for accessing a plurality of common radio communication channels. The access modules are operatively connected for accessing the common radio communication channels in an associated transmission sector. The various radio access modules may operate independently from each other, without any need for control equipment as to the occupation of common radio communication channels.

The radio node means of the invention can be advantageously assembled of independently operating access modules designed for operation under existing business cordless technologies, such as CT2 or DECT, both of which use DCA as their channel access technique. It will be understood that the radio node means are not limited to the use of this type of radio access modules. Other technologies and derivatives of these technologies providing communication channels under the control of a DCA algorithm may be also used.

By a suitable positioning of the different radio access modules, omnidirectional coverage of an area or (overlay) cell can be achieved, such that in each (overlay) cell and all its adjacent cells, all the common radio communication channels of the system are potentially available for establishing a radio link connection.

As mentioned above, the DCA algorithm occupies only free channels in a given geographical area. A required amount of redundancy, both for repair and maintenance purposes and to account for an increase in the communication capacity for a given sector, can be easily achieved by providing the common radio communication channels in a given sector by at least two radio access modules of the unit, which radio access modules may operate simultaneously during normal operation.

In order to prevent interferences while communication between the node access means and a backbone access unit is established and in progress, the control means according to the invention operates preferably using an improved DCA technique, called Continuous Dynamic Channel Selection (CDCS). The basic property of CDCS is that a radio communication channel is accessed which is least interfered at the moment of its selection.

The radio access modules and backbone access units preferably comprise transceiver means, arranged to provide a plurality of communication channels based on a multiple access technique, such as Time Division Multiple Access (TDMA), Frequency Division Multiple Access (FDMA) and Code Division Multiple Access (CDMA), for example.

A more elaborated discussion on DCA and CDCS at the interface of a remote mobile subscriber unit and a fixed radio network access unit can be found in US Patents 4,628,152; 4,731,812 and a paper by D. Akerberg, "Novel Radio Access Principles Useful for the Third Generation Mobile Radio Systems", The Third IEEE International Symposium on Personal, Indoor and Mobile Radio Communication, Boston, Massachusetts, October 19-21, 1992.

In a further embodiment of the dynamic radio backbone transmission system according to the invention, a plurality of dynamic radio access node means are connected to radio node control means. The radio node control means are arranged for connection to a network access unit, such as a mobile service switching center, a mobile telephone switching office or base station equipment of the mobile radio telecommunication network.

A very efficient use of transmission resources is obtained, in a yet further embodiment of the present invention wherein the radio node control means and the dynamic radio access node means are operatively connected for adaptively accessing a free communication channel of a plurality of common communication channels accessible at the connection between the radio node control means and the dynamic radio access node means.

In this embodiment, both the communication channels at the interface between the radio node control means and the dynamic radio access node means as well as the radio communication channels at the air interface between the dynamic radio access node means and the backbone access units are adaptively accessible, depending on the load of the radio access unit or radio base stations of the several pico-, nano- or microcells.

In order to connect over even larger distances, in a yet further embodiment of the dynamic radio backbone transmission system according to the present invention, the transceiver means of the dynamic radio node access means are connected to a range enhancer unit.

This range enhancer unit comprises frequency conversion means, RF amplifier means and antenna means. The frequency conversion means comprise a receive and transmission part, each part including mixer means connecting to local oscillator switch means. These switch means are controlled by a local oscillator for alternately converting transmit and receive signals to one and another frequency, following a Time Division Duplex (TDD) communication protocol.

### Brief Description of the Drawings

Fig. 1 shows, in a very schematic manner, part of cellular telecommunication network having a dynamic radio backbone transmission system according to the present invention, in which several smaller cells are clustered in transmission sectors.
Fig. 2 shows, in a very schematic manner, a backbone system architecture according to the present invention for use in the network of Fig. 1.
Fig. 3 shows a block diagram of a radio module for use in the radio backbone system according to the present invention.
Fig. 4 shows, in a very schematic manner, a backbone system architecture having a range enhancer unit according to the present invention.
Fig. 5 shows a circuit diagram of a range enhancer unit shown in Fig. 4.

### Detailed Description of the Embodiments

Without the intention of a limitation, the invention will now be described and illustrated with reference to an exemplary embodiments in a cellular mobile telecommunication network.

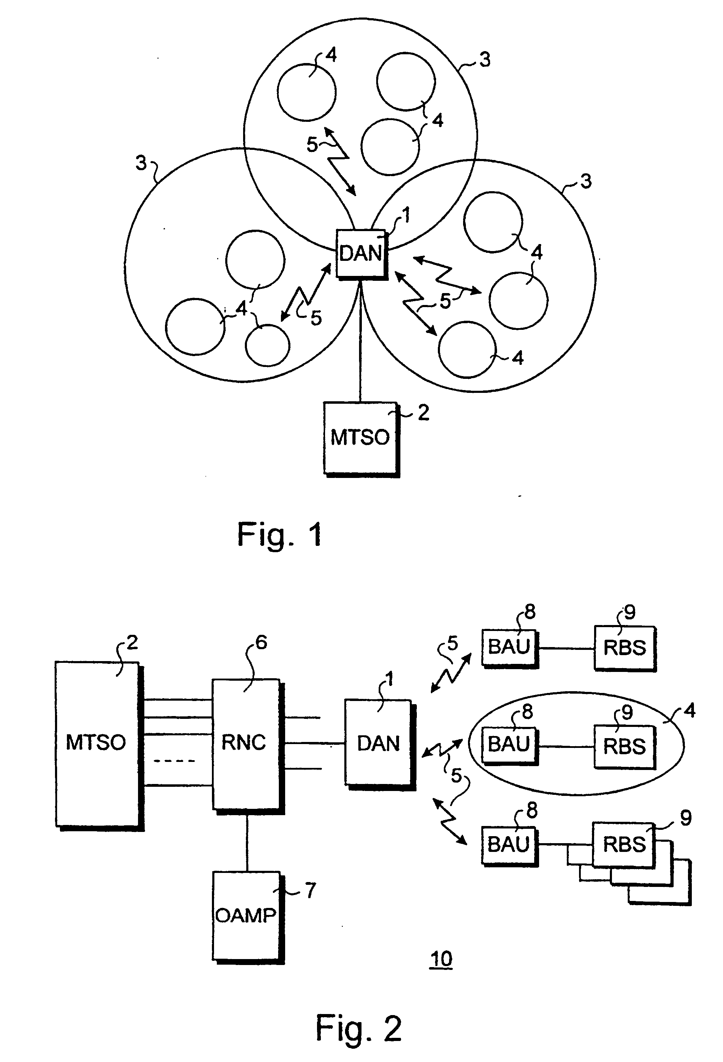

In order to increase the traffic handling capacity of a cellular mobile network within a given area, it is necessary. Fig. 1 shows a typical embodiment of a dynamic radio backbone transmission system in a cellular mobile network, in which a number of relatively small cells 4, such as picocells, nanocells and microcells are clusted in transmission sectors 3. These transmission sectors may be contained in or overlaid by a relatively large cell, such as a macrocell. For simplicity the various cells and transmission sectors are depicted in circular form.

Each cell 4 comprises a radio access unit providing service to mobile units in the particular cell 4. The various radio access units connect by a radio link 5 to so-called Dynamic radio Access Node means (DAN) 1. The DAN 1 connects to a network access unit, such as a Mobile Telephone Switching Office (MTSO), a Mobile service Switching Centre (MSC) or radio base station equipment such as a Base Station Controller (BSC) of a cellualr base station providing service to a sector or macrocell 3, for example. In the figure, it is assumed that the DAN 1 connects directly to an MTSO 2.

In particular in dense residential or metropolitan areas, a large number of small cells 4 may be involved. A typical cellular network may comprise hundreds of radio access units, thousands of mobile stations and more than one MTSO 2.

Fig. 2 shows a block diagram of a backbone transmission system architecture 10 for use in a network as shown in Fig. 1. The DAN 1 connects to the MTSO 2 via a so-called Radio Node Controller (RNC) 6. The RNC 6 controls one or more DAN's 1 and is the interface of the radio backbone system towards both the MTSO 2 and an Operation Administration Maintenance and Provisioning (OAMP) unit 7.

A cell 4 comprises a so-called Backbone Access Unit (BAU) 8 which connects to a radio access unit or Radio Base Station (RBS) 9 of a cell 4. In a GSM micro/pico- cellular network, for example, the RBS 9 is a physically small unit comprising radio transceiver and control equipment with integrated antennas typically located 5-10 m above street level.

As already mentioned in the introductory part to the present invention, the radio access node means and radio backbone units according to the invention can be based on radio access modules operating in accordance with one of the present business cordless technologies, such as designated CT2, CT3 and DECT, all using DCA for accessing one of a plurality of common radio channels.

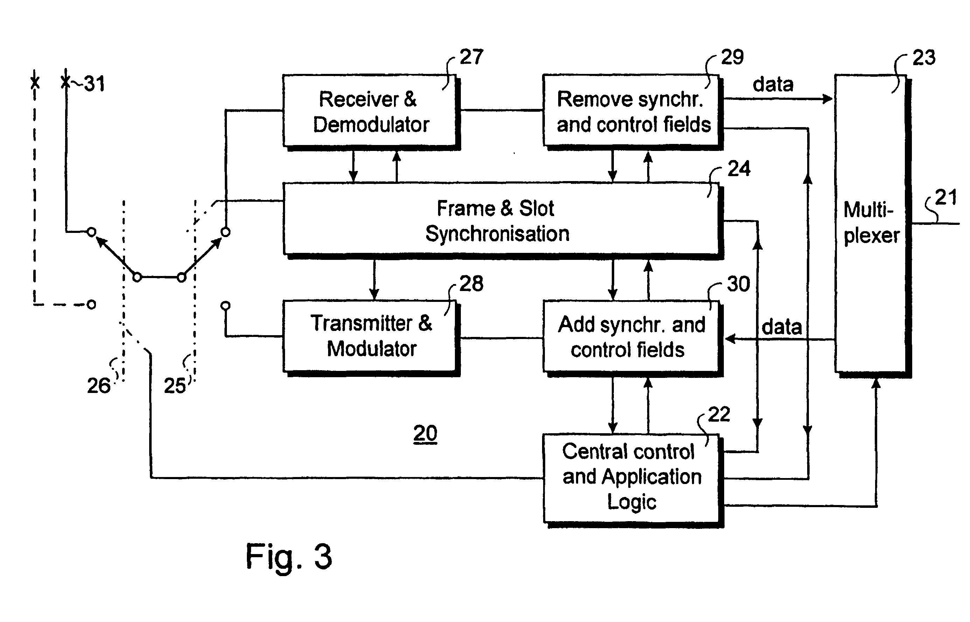

Fig. 3 shows a block diagram of a radio access module 20, which operates in accordance with the relative protocols of the DECT standard. In short, the DECT protocol includes a Multi Carrier/Time Division Multiple Access/Time Division Duplex (MC/TDMA/TDD) digital radio access technique, providing ten radio carriers, each divided into 24 timeslots which serve 12 duplex communication channels, called a frame.

The access module 20 has a wired output connection 21. Central Control and Application Logic 22 detects incoming calls and controls outgoing calls, and selects suitable combinations of carrier and time slots in accordance with the DCA/CDCS algorithm, and merges via a multiplexer 23 the different connections and time slots. The module 20 has a frame and slot synchronization unit 24 which controls slot reception and transmission timing. The central control logic 22 also controls a Transmit/Receive (T/R) switch 25 and an antenna diversity switch 26 which connects to antenna outputs 31, respectively, if antenna diversity is implemented. With antenna diversity, if a radio connection provides no good communication, the control logic first tries the other antenna before changing the radio communication channel.

The radio interface of the module 20 consists of a receiver/demodulator 27 and a transmitter/modulator 28. Synchronisation and control information is stripped from received data by unit 29, whereas such information is added to the data to be transmitted by unit 30, connected as shown.

In accordance with the present invention, each of the 120 radio channels of a unit 20 is used in a DAN 1 are accessible by a BAU 8 of the dynamic backbone transmission system shown in Fig. 2. In accordance with the DCA/CDCS technique, radio communication channels at the air interface 5 are selected and ascessed from any of these 120 channels for communication purposes, provided such channel is not used by another radio link connection in a sector 3 or cell 4, whether or not processed via the same radio access module 20. After selection, such channel is individual to the established radio link connection.

As shown, the DAN 1 is positioned at the point of intersection of the sectors 3, such that the radio access units (not shown) of each small cell 4 connect via the radio interface 5 of the DAN 1 to the MTSO 2.

The communication channels available at the interface between the RNC 6 and the DAN's 1 are, in a further embodiment of the invention, adaptively selectible for connecting radio base stations 9 to the MTSO 2. It will be appreciated by those skilled in the art that by providing both the communication channels at the interface between the RNC 6 and a DAN 1 as well as at the radio interface between a DAN 1 and a BAU 8, a very efficient dynamic radio backbone transmission system is provided.

It will be understood that this is a very efficient manner of connecting the various small cells without the basic need for a channel or frequency planning.

This type of dynamic point to multi-point backbone radio transmission solution is very cost-efficient and attractive both when the traffic generated by the several small cells 4 is relatively low and (temporarily) not justifying a wired link and in case of relatively high transmission requirements (e.g. 2 * 64 kb/s per radio base station 9) making it easy to introduce network redundancy when required. Further, the DAN 1 may act as a consolidation point from which it will be easy to go from one media to the other.

In a particular embodiment, at the MTSO/RNC-interface a number of 64 kb/s communication channels are (permanently) assigned to an RBS 9. At the DAN/BAU-radio interface 5 the available radio communication channels are dynamically allocated to each RBS, depending on its load. On the BAU/RBS-interface a limited number of 2-6 64 kb/s communication channels are available for an RBS; i.e. 4-12 32 kb/s channels between a BAU 8 and DAN 1 in case of a DECT radio air interface. Additional to the communication channels, a semi-permanent signalling channel may be provided over the backbone transmission system, i.e. MTSO 2/RNC 6/DAN 1.

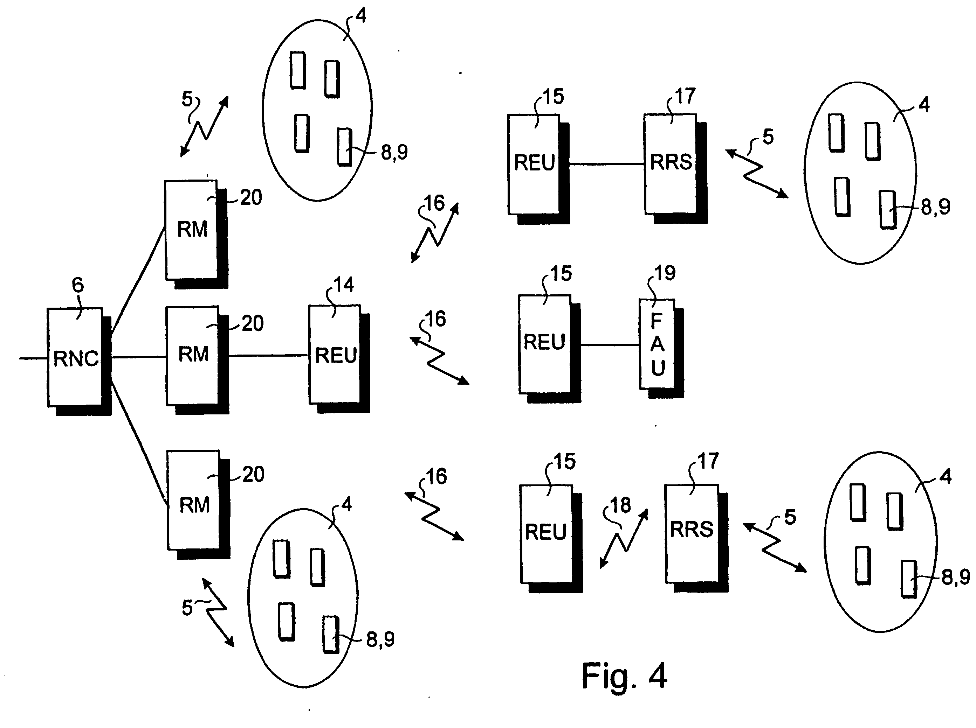

In areas of very low subscriber density from a cost point of view. there is a need for interconnecting more widely spread clusters of remote units 8, 9. Among others for use in such rural areas, there is provided a so-called Range Enhancer Unit (REU) 14 as shown in Fig. 4. The REU 14 is positioned at the site of the DAN.

In its simplest embodiment the REU 14 transponds the radio signal at the radio communication link 5 - which may be a radio signal according to the DECT standard operating in the 1900 MHz band, for example - to an arbitrary frequency band, typically at 450 or 800 MHz. The transmit signal is also amplified to a level sufficient to provide a range larger than the range of a radio access module 20 or DAN 1. A typical range of an REU 14 would be 12-15 km.

The REU 14 at the site of a DAN 1 may have as many converter, amplifier and antenna combinations as there are radio access modules 20 in a DAN 1. In a practical embodiment, the radio signal at the antenna output 31 of a particular radio access module 20 is fed to the REU 14 and converted. At a cell site 4, another REU 15 is installed in order to reconvert the radio signal 16 from the REU 14 to the frequency band of the radio communication link 5 which may be a radio signal at the DECT frequency band, for example.

The reconverted output signal of the REU 15 may be fed to a so-called Radio Repeater Station (RRS) 17 for providing radio coverage and service to a subscriber cell 4 following the protocol and frequency of the radio communication link 5. Such an RRS 17 may have a wired or a wireless link with the REU 15. The RRS 17 is essentially constructed like a radio access module 20 (see Fig. 3). The main difference is that there is a further transmit/receive output/input (or two when diversity is applied) controlled by the Central Control and Application Logic 22 which also connects the information of transmit/receive time slots at the antenna 31 to appropriate transmit/receive time slots at the transmit/receive output/input. To this end the data of at the multiplexer 23 is fed into shift registers (not shown) which, under the control of the Central Control and Application Logic 22, are controlled to timely shift the data back into the multiplexer 21 following the applied repeater protocol. This further output/input may be coupled to the receiver/demodulator 27 and the transmitter/modulator 28 or may be provided as a wired output/input. Reference is made to International Patent Application WO 94/19877.

With the REU concept according to the present invention it is possible to re-create subscriber cells 4 anywhere within the coverage area of an REU 14, 15 combination. In the case of isolated subscribers (at farms or the like) an REU 15 can be directly coupled to a subscriber remote unit or Fixed Access Unit (FAU) 19, as shown. In the case of a so-called multi-line FAU 19, i.e. a FAU 19 having multiple output subscriber terminals, an REU 15 and FAU 19 can be shared by a number of (neighbouring) subscribers, for example.

In the present invention, a DAN 1 may be co-located with one or a plurality of REU 14 which reduces the overall system installation costs significantly.

Further, through a splitter device (not shown), the antenna output of a radio access module 20 may connect both directly to an antenna and to an REU 14. Due to its amplification, the signal for feeding to the REU 14 can be relatively weak thus not noticeably affecting the power to and from an antenna.

If diversity is applied, i.e. two antenna outputs 31 at a radio access module 20 (Fig. 3), an REU 14 may be connected to each of the antenna outputs such that for each diversity path a separate REU will be active. At the subscriber site only one REU 15 may be used, which is able to receive the radio signals of both REU 14. By inserting the REU 14 in the midpoint path of the antenna diversity switch 26 (Fig. 3) one REU is sufficient in case of diversity. However, this may require an additional modification of an existing radio access module 20.

With the REU concept according to the invention, although several radio access modules 20 are mounted at the same site, for there operation they are to be regarded as providing service to different geographically spread cells having no overlapping coverage such that each radio access modules can provide its full capacity to the area to which it is addressed.

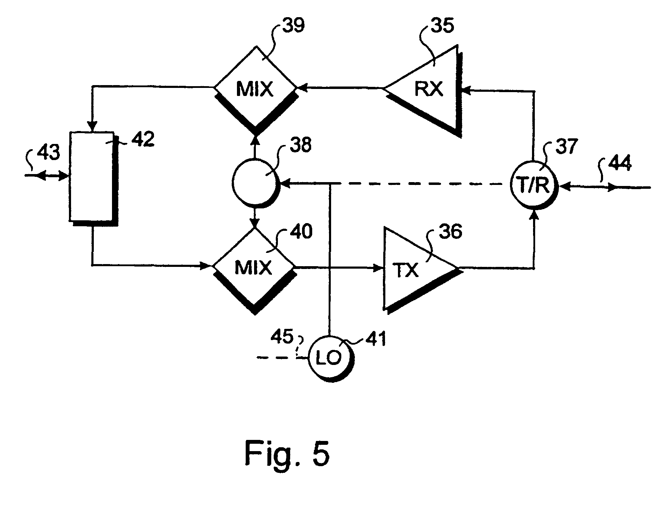

Fig. 5 shows, in a very schematic manner, a circuit diagram of an REU for TDD operation. A low noise receiver RX 35 connects with its input to a Transmit/Receive (T/R) switch 37 and connects with its output to an input of a mixer 39. A transmitter TX 36 connects with its output to the T/R switch 37 and connects with its input to an output of a mixer 40. Both mixers 39, 40 connect with an input to an output of a so-called Local Oscillator (LO) switch 38, the input of which connects to a Local Oscillator (LO) 41. Another output of mixer 39 and another input of mixer 40 connect to an input respectively an output of a coupler 42. The coupler 42 provides a combined transmit/receive input 43 of the REU while the T/R switch 37 provides a transmit/receive output 44 of the REU.

Due to the TOD operation, no filtering is required to separate the transmit and receive paths. The switching between transmit and receive mode is provided by the switching of the local oscillator to any of the mixers 39, 40 and the T/R switch 37. An appropriate control signal can be provided by the radio access modules 20 or via a separate signalling path 45 and signalling means (not shown), for example.

Although the present invention has been described with reference to a specific embodiment and design of an access unit and in more detail with respect to its use in a GSM communication system, it will be understood that the novel idea of the present invention can be used with several access technologies and many different embodiments of the dynamic access node means and backbone access units.

## Claims

1. A radio backbone transmission system (10) for connecting a plurality of geographically spread remote radio access units (9) to a network access unit (2) of a mobile radio telecommunication network, such as a cellular mobile telecommunication network, said radio access units (9) each providing service to a particular area or cell (4) of said mobile radio telecommunication network, **characterised in that** said radio backbone transmission system (10) comprises dynamic access node means (1) having radio transceiver means (27, 28), antenna means (31) and control means (22), operatively connected for accessing a plurality of common radio communication channels, said radio access units (9) comprising backbone access units (8) having radio transceiver means (27, 28), antenna means (31) and control means (22), each of said backbone access units (8) being operatively connected for accessing said plurality of common radio communication channels, wherein said control means (22) of said dynamic radio access node means (1) and said backbone access units (8) are arranged for adaptively selecting a free communication channel of said plurality of common radio communication channels, said dynamic access node means (1) being arranged for connection to said network access unit (2).

2. A radio backbone transmission system (10) according to claim 1, wherein said radio transceiver means (27, 28), antenna means (31) and control means (22) of said dynamic radio access node means (1) are arranged for accessing said plurality of common radio communication channels in directionally separated transmission sectors (3), wherein said control means (22) are arranged to co-operate with said backbone access units (8) in a transmission sector (3) for adaptively selecting a free radio communication channel of said plurality of common radio communication channels, which radio communication channel, when accessed, can be reused by the same dynamic radio access node means (1) but is individual to a radio link connection in a transmission sector (3).

3. A radio backbone transmission system (10) according to claim 2, wherein said dynamic radio access node means (1) comprise a number of radio access modules (20), each having radio transceiver means (27, 28) and control means (22) arranged for accessing a plurality of common radio communication channels, wherein said radio access modules (20) are operatively connected for accessing said plurality of common radio communication channels in an associated transmission sector (3).

4. A radio backbone transmission system (10) according to claim 1, 2 or 3, wherein said antenna means (31) are arranged for providing point-to-point radio link connections between said radio access node means (1) and said backbone access units (8).

5. A radio backbone transmission system (10) according to claim 1, 2, 3 or 4, wherein said control means (22) are arranged for continuously adaptively accessing a free radio communication channel of said plurality of common radio communication channels.

6. A radio backbone transmission system (10) according to claim 1, 2, 3, 4 or 5, wherein said dynamic radio access node means (1) and said backbone access units (8) are arranged for accessing a plurality of common radio communication channels in accordance with a multiple radio access technique.

7. A radio backbone transmission system (10) according to claim 1, 2, 3, 4, 5 or 6, comprising a plurality of dynamic radio access node means (1), each connecting to radio node control means (6), said radio node control means (6) being arranged for connection to a network access unit (2), such as a mobile service switching center, a mobile telephone switching office or base station equipment of said mobile radio telecommunication network.

8. A radio backbone transmission system (10) according to claim 7, wherein said radio node control means (6) and said dynamic radio access node means (1) are operatively connected for adaptively accessing a free communication channel of a plurality of common communication channels accessible at the connection between said radio node control means (6) and said dynamic radio access node means (1).

9. A radio backbone transmission system (10) according to claim 7 or 8, wherein at the connection between said radio node control means (6) and said network access unit (2) for each of said radio access units (9) a number of communication channels is assigned.

10. A radio backbone transmission system (10) according to any of the previous claims, wherein transceiver means (27, 28) of said dynamic radio node access means (1) are connected to a range enhancer unit (14).

11. A radio backbone transmission system (10) according to claim 10, wherein said range enhancer unit (14) comprises frequency conversion means (38-41), RF amplifier means (35, 36) and antenna means (44), said frequency conversion means (38-41) comprising a receive and transmission path, each path including mixer means (39, 40) connecting to local oscillator switch means (38), which switch means (38) are controlled by a local oscillator (41) for alternately converting transmit and receive signals to one and another frequency following a Time Division Duplex (TDD) communication protocol.

12. A radio backbone transmission system (10) according to any of the previous claims, wherein said dynamic radio access node means (1) and said backbone access units (8) operate in accordance with the relative protocols of the Digital Enhanced Cordless Telecommunications (DECT) standard.

13. Use of a radio backbone transmission system (10) according to any of the previous claims in a cellular mobile telecommunication network, in particular a cellular mobile telecommunication network operating in accordance with the Global System for Mobile communications (GSM) standard.

## Patentansprüche

1. Funkhaupttrassen-Übertragungssystem (10) zum Verbinden einer Vielzahl von geografisch verteilten entfernten Funkzugriffseinheiten (9) zu einer Netzzugriffseinheit (2) eines Mobilfunk-Telekommunikationsnetzes, wie etwa eines zellularen Mobiltelekommunikationsnetzes, wobei die Funkzugriffseinheiten (9) jede Dienste einem bestimmten Bereich oder Zelle (4) des Mobilfunk-Telekommunikationsnetzes bereitstellen, **gekennzeichnet dadurch, dass** das Funkhaupttrassen-Übertragungssystem (10) umfasst dynamische Zugriffsknotenmittel (1) mit Funktransceivermitteln (27, 28), Antennenmitteln (31) und Steuermitteln (22), die operativ zum Zugreifen auf eine Vielzahl von gemeinsamen Funkkommunikationskanälen verbunden sind, wobei die Funkzugriffseinheiten (9) Haupttrassen-Zugriffseinheiten (8) mit Funktransceivermitteln (27,28), Antennenmitteln (31) und Steuermitteln (22) umfassen, jede der Haupttrassen-Zugriffseinheiten (8) zum Zugreifen auf die Vielzahl von gemeinsamen Funkkommunikationskanälen operativ verbunden ist, worin die Steuermittel (22) des dynamischen Funkzugriffsknotenmittels (1) und die Funkhaupttrassen-Zugriffseinheiten (8) zum adaptiven Auswählen eines freien Kommunikationskanals aus der Vielzahl von gemeinsamen Funkkommunikationskanälen angeordnet sind, wobei die dynamischen Zugriffsknotenmittel (1) für eine Verbindung mit der Netzzugriffseinheit (2) angeordnet sind.

2. Funkhaupttrassen-Übertragungssystem (10) nach Anspruch 1, wobei die Funktransceivermittel (27, 28), Antennenmittel (31) und Steuermittel (22) des dynamischen Funkzugriffsknotenmittels (1) zum Zugreifen auf die Vielzahl von gemeinsamen Funkkommunikationskanälen in direktional getrennten Übertragungssektoren (3) angeordnet sind, wobei die Steuermittel (22) angeordnet sind, mit den Haupttrassen-Zugriffseinheiten (8) in einem Übertragungssektor (3) zum adaptiven Auswählen eines freien Funkkommunikationskanals aus der Vielzahl von gemeinsamen Funkkommunikationskanälen zusammenzuarbeiten, der Funkkommunikationskanal, wenn auf ihn zugegriffen wird, durch das gleiche dynamische Funkzugriffsknotenmittel (1) erneut verwendet werden kann, aber für eine Funklinkverbindung in einem Übertragungssektor (3) individuell ist.

3. Funkhaupttrassen-Übertragungssystem (10) nach Anspruch 2, wobei die dynamischen Funkzugriffsknotenmittel (1) eine Zahl von Funkzugriffsmodulen (20) umfassen, jeder mit Funktransceivermitteln (27, 28) und Steuermitteln (22), angeordnet zum Zugreifen auf eine Vielzahl von gemeinsamen Funkkommunikationskanälen, wobei die Funkzugriffsmodule (20) zum Zugreifen auf die Vielzahl von gemeinsamen Funkkommunikationskanälen in einem zugehörigen Übertragungssektor (3) operativ verbunden sind.

4. Funkhaupttrassen-Übertragungssystem (10) nach Anspruch 1, 2 oder 3, wobei die Antennenmittel (31) zum Vorsehen von Punkt-zu-Punkt-Funklinkverbindungen zwischen den Funkzugriffsknotenmitteln (1) und den Haupttrassen-Zugriffseinheiten (8) angeordnet sind.

5. Funkhaupttrassen-Übertragungssystem (10) nach Anspruch 1, 2, 3 oder 4, wobei die Steuermittel (22) zum kontinuierlichen adaptiven zugreifen auf einen freien Funkkommunikationskanal aus der Vielzahl von gemeinsamen Funkkommunikationskanälen angeordnet sind.

6. Funkhaupttrassen-Übertragungssystem (10) nach Anspruch 1, 2, 3, 4 oder 5, wobei die dynamischen Funkzugriffsknotenmittel (1) und die Haupttrassen-Zugriffseinheiten (8) zum Zugreifen auf eine Vielzahl von gemeinsamen Funkkommunikationskanälen in Übereinstimmung mit einer Mehrfachfunkzugriffstechnik angeordnet sind.

7. Funkhaupttrassen-Übertragungssystem (10) nach Anspruch 1, 2, 3, 4, 5 oder 6, umfassend eine Vielzahl von dynamischen Funkzugriffsknotenmitteln (1), wobei sich jedes mit Funkknotensteuermitteln (6) verbindet, die Funkknotensteuermittel (6) für eine Verbindung mit einer Netzzugriffseinheit (2) angeordnet sind, wie etwa einer Mobildienstvermittlungsstelle, einem Mobiltelefon-Vermittlungsamt oder Basisstationsausrüstung des Mobilfunk-Telekommunikationsnetzes.

8. Funkhaupttrassen-Übertragungssystem (10) nach Anspruch 7, wobei die Funkknotensteuermittel (6) und die dynamischen Funkzugriffsknotenmittel (1) zum adaptiven Zugreifen auf einen freien Kommunikationskanal aus einer Vielzahl von gemeinsamen Funkkommunikationskanälen operativ verbunden sind, die in der Verbindung zwischen den Funkknotensteuermitteln (6) und den dynamischen Funkzugriffsknotenmitteln (1) zugreifbar sind.

9. Funkhaupttrassen-Übertragungssystem (10) nach Anspruch 7 oder 8, wobei in der Verbindung zwischen den Funkknotensteuermitteln (6) und der Netzzugriffseinheit (2) für jede der Funkzugriffseinheiten (9) eine Zahl von Kommunikationskanälen zugewiesen ist.

10. Funkhaupttrassen-Übertragungssystem (10) nach beliebigen der vorangehenden Ansprüche, wobei Transceivermittel (27, 28) der dynamischen Funkknotenzugriffsmittel (1) mit einer Bereichserweiterereinheit (14) verbunden sind.

11. Funkhaupttrassen-Übertragungssystem (10) nach Anspruch 10, wobei die Bereichserweiterereinheit (14) Frequenzkonvertierungsmittel (38-41), HF-Verstärkermittel (35, 36) und Antennenmittel (44) umfasst, die Frequenzkonvertierungsmittel (38-41) einen Empfangs- und Übertragungspfad umfassen, jeder Pfad inkludierend Mischermittel (39, 40), die sich mit einem lokalen Oszillatorschaltermittel (38) verbinden, wobei die Schaltermittel (38) durch einen lokalen Oszillator (41) zum wechselweisen Konvertieren von Sende- und Empfangssignalen zu einer und einer anderen Frequenz einem Zeitduplex- (TDD) Kommunikationsprotokoll folgend gesteuert werden.

12. Funkhaupttrassen-Übertragungssystem (10) nach beliebigen der vorangehenden Ansprüche, wobei die dynamischen Funkzugriffsknotenmittel (1) und die Haupttrassen-Zugriffseinheiten (8) in Übereinstimmung mit den relativen Protokollen des Standards für digitale erweiterte schnurlose Telekommunikationen (DECT) arbeiten.

13. Verwendung eines Funkhaupttrassen-Übertragungssystems (10) nach beliebigen der vorangehenden Ansprüche in einem zellularen Mobiltelekommunikationsnetz, insbesondere einem zellularen Mobiltelekommunikationsnetz, das in Übereinstimmung mit dem Standard für ein globales System für mobile Kommunikationen (GSM) arbeitet.

## Revendications

1. Système de transmission radio d'infrastructure (10) pour connecter une multiplicité d'unités d'accès radio distantes (9) géographiquement dispersées, à une unité d'accès au réseau (2) d'un réseau de télécommunication radio mobile, tel qu'un réseau de télécommunication mobile cellulaire, chacune de ces unités d'accès radio (9) fournissant des services à une zone ou cellule (4) particulière du réseau de télécommunication radio mobile, **caractérisé en ce que** ce système de transmission radio d'infrastructure (10) comprend une structure de noeud d'accès dynamique (1) ayant un moyen émetteur-récepteur de radio (27, 28), une structure d'antenne (31) et un moyen de commande (22), connectés fonctionnellement pour accéder à une multiplicité de canaux de radiocommunication communs, ces unités d'accès radio (9) comprenant des unités d'accès d'infrastructure (8) ayant un moyen émetteur-récepteur de radio (27, 28), une structure d'antenne (31) et un moyen de commande (22), chacune des unités d'accès d'infrastructure (8) étant connectée fonctionnellement pour accéder à la multiplicité de canaux de radiocommunication communs, dans lequel le moyen de commande (22) de la structure de noeud d'accès radio dynamique (1) et les unités d'accès d'infrastructure (8) sont arrangés pour sélectionner de façon adaptative un canal de communication libre de la multiplicité de canaux de radiocommunication communs, la structure de noeud d'accès dynamique (1) étant arrangée pour la connexion à l'unité d'accès au réseau (2).

2. Un système de transmission radio d'infrastructure (10) selon la revendication 1, dans lequel le moyen émetteur-récepteur de radio (27, 28), la structure d'antenne (31) et le moyen de commande (22) de la structure de noeud d'accès radio dynamique (1) sont arrangés pour accéder à la multiplicité de canaux de radiocommunication communs dans des secteurs de transmission (3) Séparés au point de vue directionnel, dans lequel le moyen de commande (22) est arrangé pour coopérer avec les unités d'accès d'infrastructure (8) dans un secteur de transmission (3), pour sélectionner de façon adaptative un canal de radiocommunication libre de la multiplicité de canaux de radiocommunication communs, ce canal de radiocommunication, lorsqu'il fait l'objet d'une opération d'accès, pouvant être réutilisé par la même structure de noeud d'accès radio dynamique (1), mais étant affecté individuellement à une connexion de liaison radio dans un secteur de transmission (3).

3. Système de transmission radio d'infrastructure (10) selon la revendication 2, dans lequel la structure de noeud d'accès radio dynamique (1) comprend un certain nombre de modules d'accès radio (20), ayant chacun un moyen émetteur-récepteur de radio (27, 28) et un moyen de commande (22) arrangés pour accéder à une multiplicité de canaux de radiocommunication communs, dans lequel les modules d'accès radio (20) sont connectés fonctionnellement pour accéder à la multiplicité de canaux de radiocommunication communs dans un secteur de transmission (3) associé.

4. Système de transmission radio d'infrastructure (10) selon la revendication 1, 2 ou 3, dans lequel la structure d'antenne (31) est arrangée pour fournir des connexions de liaison radio point à point entre la structure de noeud d'accès radio (1) et les unités d'accès d'infrastructure (8).

5. Système de transmission radio d'infrastructure (10) selon la revendication 1, 2, 3 ou 4, dans lequel le moyen de commande (22) est arrangé pour accéder continuellement de façon adaptative à un canal de radiocommunication libre de la multiplicité de canaux de radiocommunication communs.

6. Système de transmission radio d'infrastructure (10) selon la revendication 1, 2, 3, 4 ou 5, dans lequel la structure de noeud d'accès radio dynamique (1) et les unités d'accès d'infrastructure (8) sont arrangées pour accéder à une multiplicité de canaux de radiocommunication communs conformément à une technique d'accès radio multiple.

7. Système de transmission radio d'infrastructure (10) selon la revendication 1, 2, 3, 4, 5 ou 6, comprenant une multiplicité de structures de noeud d'accès radio dynamiques (1), chacune d'elles étant connectée à un moyen de commande de noeud radio (6), ce moyen de commande de noeud radio (6) étant arrangé pour la connexion à une unité d'accès au réseau (2), telle qu'un centre de commutation de service mobile, un central téléphonique mobile ou un équipement de station de base du réseau de télécommunication radio mobile.

8. Système de transmission radio d'infrastructure (10) selon la revendication 7, dans lequel le moyen de commande de noeud radio (6) et la structure de noeud d'accès radio dynamique (1) sont connectés fonctionnellement pour accéder de manière adaptative à un canal de communication libre d'une multiplicité de canaux de communication communs accessibles à la connexion entre le moyen de commande de noeud radio (6) et la structure de noeud d'accès radio dynamique (1).

9. Système de transmission radio d'infrastructure (10) selon la revendication 7 ou 8, dans lequel un nombre de canaux de communication est assigné à la connexion entre le moyen de commande de noeud radio (6) et l'unité d'accès au réseau (2) pour chacune des unités d'accès radio (9).

10. Système de transmission radio d'infrastructure (10) selon l'une quelconque des revendications précédentes, dans lequel des moyens émetteurs-récepteurs (27, 28) de la structure de noeud d'accès radio dynamique (1) sont connectés à une unité d'augmentation de portée (14).

11. Système de transmission radio d'infrastructure (10) selon la revendication 10, dans lequel l'unité d'augmentation de portée (14) comprend un moyen de conversion de fréquence (38-41), un moyen amplificateur RF (35, 36) et une structure d'antenne (44), le moyen de conversion de fréquence (38-41) comprenant une voie de réception et d'émission, chaque voie incluant un moyen mélangeur (39, 40) connecté à une structure de commutateur d'oscillateur local (38), cette structure de commutateur (38) étant commandée par un oscillateur local (41) pour convertir alternativement des signaux d'émission et de réception vers une fréquence et une autre, en suivant un protocole de communication en duplex par répartition dans le temps (ou TDD pour "Time Division Duplex").

12. Système de transmission radio d'infrastructure (10) selon l'une quelconque des revendications précédentes, dans lequel la structure de noeud d'accès radio dynamique (1) et les unités d'accès d'infrastructure (8) fonctionnent conformément aux protocoles relatifs du standard Digital Enhanced Cordless Telecommunications (DECT).

13. Utilisation d'un système de transmission radio d'infrastructure (10) selon l'une quelconque des revendications précédentes dans un réseau de télécommunication mobile cellulaire, en particulier un réseau de télécommunication mobile cellulaire fonctionnant conformément au standard Global System for Mobile Communications (GSM).
